# EUROPÄISCHE PATENTSCHRIFT

(11) **EP 3 056 684 B1**
(45) Veröffentlichungstag und Bekanntmachung des Hinweises auf die Patenterteilung: **16.05.2018**
(21) Anmeldenummer: 15155242.9
(22) Anmeldetag: 16.02.2015
(51) Int. Cl.: F01D 11/00

(54) **Axial geteilter Innenring für eine Strömungsmaschine, Leitschaufelkranz und Flugtriebwerk**
Axially split inner ring for a flow machine, guide blade assembly and aircraft engine
Bague intérieure séparée axialement pour une turbomachine, un stator et groupe motopropulseur

(43) Veröffentlichungstag der Anmeldung: 17.08.2016
(73) Patentinhaber: MTU Aero Engines AG, 80995 München (DE)
(72) Erfinder: Humhauser, Werner, 85368 Moosburg (DE); Klingels, Hermann, 85221 Dachau (DE)

(56) Entgegenhaltungen:
- EP-A1- 2 469 023
- EP-A1- 2 716 874
- DE-A1-102008 032 661
- US-A- 5 421 703

## Beschreibung

Die vorliegende Erfindung betrifft einen axial geteilten Innenring für eine Strömungsmaschine gemäß dem Oberbegriff des Anspruchs 1. Des Weiteren betrifft die vorliegende Erfindung einen Leitschaufelkranz gemäß Anspruch 7 sowie ein Flugtriebwerk gemäß Anspruch 9.

In Strömungsmaschinen, insbesondere in axialen Gasturbinen, werden Leiträder (im Folgenden werden die Begriffe Leitrad und Leitschaufelkranz synonym verwendet) am radial inneren Ende oft mit Innenringen zum Stabilisieren der Leitschaufeln und zum Befestigen von Einlaufdichtungen verbunden. Die Einlaufdichtungen sollen Leckageströmungen zwischen einem Rotor und dem Leitschaufelkranz zumindest verringern. Für die Innenringe gibt es unterschiedliche Ausführungsformen. Beispielsweise gibt es mehrteilige Innenringe, die sowohl radial, axial als auch in Umfangsrichtung geteilt sein können. Axial geteilte Innenringsegmente werden in der Regel miteinander verschraubt. Für die Befestigung bzw. die Verbindung der Einlaufdichtungen mit dem Innenring gibt es unterschiedliche Ausführungsformen. Beispielsweise können die Einlaufdichtungen auf einem zusätzlichen Flansch befestigt sein. Dieser zusätzliche Flansch kann dann mit dem Innenring oder mit einzelnen Innenringsegmenten verbunden werden, beispielsweise mittels Verschraubungen.

In der US 5,421,703 A wird eine sicher verankerte Schaufelhülse für einen Axialströmungsverdichter beschrieben.

In der EP 2 469 023 A1 wird ein Gasturbinentriebwerk mit gekühlten Rotorscheiben beschrieben.

In der DE 102008 032661 A1 wird eine Strömungsmaschine mit einem Leitschaufelsystem und einem Innenring beschrieben, wobei der Innenring ein vorderes und ein hinteres Ringsegment mit einem Verbindungsring aufweist.

Eine Aufgabe der vorliegenden Erfindung ist es, eine weitere Befestigung bzw. Verbindung von Dichtungssegmenten mit Innenringen vorzuschlagen.

Die erfindungsgemäße Aufgabe wird durch einen axial geteilten Innenring mit den Merkmalen des Anspruchs 1 gelöst. Sie wird ferner durch einen Leitschaufelkranz mit den Merkmalen des Anspruchs 7 sowie ein Flugtriebwerk mit den Merkmalen des Anspruchs 9 gelöst.

Erfindungsgemäß wird somit ein axial geteilter, zum Verbinden mit Leitschaufeln ausgestalteter Innenring für eine Strömungsmaschine vorgeschlagen. Der axial geteilte Innenring umfasst wenigstens ein erstes und ein zweites Ringsegment. Das erste Ringsegment ist stromauf zum zweiten Ringsegment angeordnet. Das zweite Ringsegment weist ein erstes Dichtungssegment auf. Weiterhin ist wenigstens ein Abschnitt des zweiten Ringsegments relativ zum ersten Ringsegment radial innen angeordnet. Abschnitte des zweiten Ringsegments und Abschnitte des ersten Dichtungssegments erstrecken sich stromauf über die axiale Breite des ersten Ringsegments.

Dichtungssegmente können unterschiedlich ausgestaltet sein, beispielsweise als Einlaufdichtung, Labyrinthdichtung, Schleifdichtung etc. Die Dichtungssegmente des erfindungsgemäßen axial geteilten Innenrings sind insbesondere stimseitig radial innen an dem Innenring angeordnet. Dichtungssegmente können vorteilhaft Verlustströmungen zwischen den Leitschaufeln und einem radial innen angeordneten Rotor der Strömungsmaschine minimieren oder zumindest verringern.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

Strömungsmaschinen sind insbesondere axiale Strömungsmaschinen, beispielsweise axiale Gasturbinen.

Als Axialrichtung wird insbesondere die Hauptdurchströmungsrichtung der Strömungsmaschine bezeichnet. Die Radialrichtung ist senkrecht zur Axialrichtung ausgerichtet. Insbesondere die Längsachsen von Laufschaufeln und Leitschaufeln können radial ausgerichtet sein.

In bestimmten erfindungsgemäßen Ausführungsformen ist das zweite Ringsegment mit wenigstens einem ersten Dichtungssegment verbunden. Das erste Ringsegment kann radial innen von Abschnitten des zweiten Ringsegments begrenzt oder abgedeckt sein. Folglich können sich Abschnitte des zweiten Ringsegments an einer radial inneren Seite des ersten Ringsegments wenigstens über dessen axiale Ausdehnung erstrecken.

Die wenigstens zwei Ringsegmente des axial geteilten Innenrings können auf verschiedene Art und Weise ausgestaltet sein. Beispielsweise können in einer Teilungsebene der miteinander verbundenen Ringsegmente Lagerzapfen der Leitschaufeln angeordnet sein. Die Leitschaufeln können verstellbar sein, das heißt, sie können um ihre Längsachse drehbar sein. Mittels drehbarer Leitschaufeln können vorteilhaft verschiedene Anströmwinkel für die Anströmung der Laufschaufeln eingestellt werden, um beispielsweise günstige Wirkungsgrade einzelner Betriebspunkte zu erreichen.

Die Ringsegmente können formschlüssig und/oder kraftschlüssig miteinander verbunden sein. Beispielsweise kann ein Kraftschluß mittels über dem Umfang verteilter Verschraubungen der Ringsegmente erzielt werden. Beispielsweise kann das zweite Ringsegment das erste Ringsegment, oder umgekehrt, U-förmig umschließen oder sich L-förmig aneinander anpassen. Die Ringsegmente können ganz oder teilweise formschlüssig miteinander verbunden sein.

In gewissen erfindungsgemäßen Ausführungsformen ist das erste Ringsegment und/ oder das zweite Ringsegment in Umfangsrichtung (senkrecht zur Radialrichtung, wobei die Radialrichtung senkrecht zur Axialrichtung der Strömungsmaschine ausgerichtet ist) segmentiert. Beispielsweise kann das erste Ringsegment und/ oder das zweite Ringsegment in Umfangsrichtung Halbringe mit jeweils 180 Grad Umfangswinkel aufweisen. Die Ringsegmente können gleichfalls mehrfach geteilt sein, beispielsweise in drei Segmente mit jeweils 120 Grad Umfangswinkel, in vier Segmente mit jeweils 90 Grad Umfangswinkel usw. Die Ringsegmente können weiterhin in Segmente mit unterschiedlichen Umfangswinkeln unterteilt sein.

In einigen erfindungsgemäßen Ausführungsformen ist das zweite Ringsegment mit einem zweiten Dichtungssegment verbunden oder weist ein zweites Dichtungssegment auf. Das zweite Dichtungssegment ist stromab von dem ersten Dichtungssegment und/oder stromab von dem ersten Ringsegment angeordnet. Das zweite Dichtungssegment ist in seiner Funktion und in seinem Aufbau insbesondere entsprechend dem erste Dichtungssegment ausgeführt, insbesondere als Einlaufdichtung.

In manchen erfindungsgemäßen Ausführungsformen ist das zweite Dichtungssegment auf einem Radius angeordnet, der größer ist als der mittlere Radius der radialen Erstreckung des ersten Ringsegments. Der mittlere Radius der radialen Erstreckung des ersten Ringsegments ist der geometrisch mittlere (oder hälftige) Radius zwischen dem radial äußeren und dem radial inneren Radius der ersten Ringsegments. Folglich ist das zweite Ringsegment in Bezug zum ersten Ringsegment radial versetzt und radial weiter außen angeordnet. Eine derartige Anordnung ermöglicht vorteilhaft, Kavitäten des Strömungskanals stromab des Innenrings zu verkleinern.

Eine Kavität kann als Bereich des Strömungskanals zwischen einem Leitgitter (das radial innen, stirnseitig, den erfindungsgemäßen Innenring aufweist) und einer nachfolgenden Rotorstufe mit Laufschaufeln bezeichnet werden. Eine kleinere Kavität kann die Strömungsverluste im Bereich des ersten und zweiten Dichtungssegments reduzieren. Der Wirkungsgrad der Strömungsmaschine kann, zumindest in einigen Betriebspunkten, erhöht werden.

In bestimmten erfindungsgemäßen Ausführungsformen weist der Innenring mehr als zwei Dichtungssegmente auf. Beispielsweise kann unmittelbar stromauf oder stromab des ersten und/oder des zweiten Dichtungsegments ein weiteres Dichtungssegment angeordnet sein. Ebenso kann ein weiteres Dichtungssegment auf einem weiteren Radius angeordnet ist, der kleiner oder größer ist als der mittlere Radius der radialen Erstreckung des ersten Ringsegments.

In gewissen erfindungsgemäßen Ausführungsformen ist das Dichtungssegment eine Einlaufdichtung. Die Einlaufdichtung kann als Einlaufbelag, Anstreifdichtung, Wabendichtung, Honigwabendichtung, Metallschaum oder als offenporiger Metallschwamm bezeichnet werden oder ausgeführt sein. Die Hohlräume des Metallschwamms können zumindest bereichsweise mit einem weiteren Material, beispielsweise einem Polymer, gefüllt sein. Mittels eines Einlaufbelags kann ein verschleißarmes oder verschleißfreies Anstreifen eines Rotors gegenüber einem Leitring (oder allgemein gegenüber einem statischen Strömungsmaschinenbauteil) erzielt werden. Die Dichtungsfunktion wird rotorseitig mittels sogenannter Dichtfins erzielt, die, beispielsweise bei mehreren hintereinander angeordneten Dichtfins an einer Einlaufdichtung, eine Labyrinthdichtung ausbilden können.

In einigen erfindungsgemäßen Ausführungsformen ist wenigstens ein Dichtungssegment formschlüssig und/oder materialschlüssig mit dem Innenring verbunden. Der Innenring kann als Träger des Dichtungssegments bezeichnet werden. Das Dichtungssegment kann materialschlüssig insbesondere mittels Kleben oder Löten mit dem Innenring verbunden sein. Das Dichtungssegment kann weiterhin formschlüssig mit dem Innenring verbunden sein, beispielsweise mittels einer Feder-Nut-Verbindung. Der Innenring kann eine umlaufende Nut aufweisen, in die über dem Umfang segmentierte Dichtungsträger eingesetzt oder eingefügt werden.

In bestimmten erfindungsgemäßen Ausführungsformen ist wenigstens ein Dichtungssegment und/oder wenigstens ein Ringsegment mittels eines generativen Fertigungsverfahrens hergestellt.

Ein generatives Herstellungsverfahren kann als additives Herstellverfahren oder als Rapid Prototyping Verfahren bezeichnet werden. Generative Fertigungsverfahren sind beispielsweise die Stereolithografie, das selektive Laserschmelzen, das selektive Lasersintern, das Fused Deposition Modeling, das Laminated Object Modelling, das 3D Printing, sowie das Kaltgasspritzen.

Insbesondere ist wenigstens ein Dichtungssegment und das zweite Ringsegment zusammen mittels eines generativen Fertigungsverfahrens hergestellt. Dabei können unterschiedliche Materialien für einerseits das Ringsegment und andererseits das Dichtungssegment, das insbesondere als Einlaufdichtung ausgeführt ist, eingesetzt werden. Eine Herstellung des Dichtungssegments und des Ringsegments in einem Fertigungsschritt kann vorteilhaft einen Montageschritt einsparen. Weiterhin kann die Maßtoleranz des Bauteils erhöht oder verbessert werden, da der Montageschritt eines möglichen Klebens oder Lötens (die beispielsweise einen thermischen Verzug bewirken können) nicht mehr notwendig ist.

Manche oder alle erfindungsgemäßen Ausführungsformen können einen, mehrere oder alle der oben und/oder im Folgenden genannten Vorteile aufweisen.

Mittels des erfindungsgemäßen axial geteilten Innenrings, bei dem das stromab angeordnete Ringsegment wenigstens ein Dichtungssegment aufweist, kann die Anzahl der Teile des Innenrings reduziert werden. Mittels der funktionalen Verbindung des Ringsegments mit dem Dichtungssegment kann ein separates Dichtungsträgersegment vorteilhaft eingespart werden. Der Montageaufwand wird folglich verringert. Erhöhte Fertigungstoleranzen bei einer Montage mit einem separaten Dichtungsträgersegment nach dem Stand der Technik werden vorteilhaft vermieden. Dadurch können die Fertigungskosten insgesamt reduziert werden.

Mittels des erfindungsgemäßen axial geteilten Innenrings kann die Anzahl möglicher Leckagestellen im Bereich des Innenrings und der Dichtung gegenüber einer Ausgestaltung nach dem Stand der Technik mit einem separaten Dichtungsträger reduziert werden. Dadurch kann vorteilhaft der Wirkungsgrad erhöht werden.

Mittels des erfindungsgemäßen axial geteilten Innenrings kann die Teileanzahl und damit das Gewicht der Strömungsmaschine vorteilhaft reduziert werden. Dadurch können weitere Vorteile, beispielsweise ein geringerer Treibstoffverbrauch bei der Anwendung in einem Flugtriebwerk, erzielt werden.

Mittels der funktionalen Verbindung des zweiten, stromab angeordneten Ringsegments mit dem Dichtungssegment des erfindungsgemäßen axial geteilten Innenrings kann die Größe der Kavität zwischen dem Innenring und dem weiter stromab angeordneten Rotorsegment verringert werden. Damit können Strömungsverluste (Leckageströmungen) vorteilhaft verringert werden.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils schematisch vereinfachten Figuren gilt:
- **Fig. 1**: zeigt Anordnungen von Innenringen mit Dichtungsträgern gemäß dem Stand der Technik;
- **Fig. 2**: zeigt eine Schnittdarstellung eines erfindungsgemäßen axial geteilten Innenrings mit zwei Dichtungssegmenten; und
- **Fig. 3**: zeigt ein erfindungsgemäßes Flugtriebwerk.

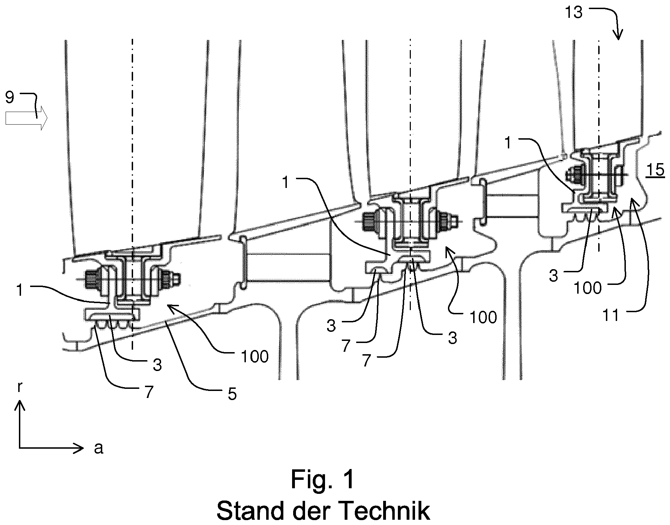

**Fig. 1** zeigt Anordnungen von Innenringen 100 mit Dichtungsträgern 1 gemäß dem Stand der Technik. Der linke und mittlere Innenring 100 weist jeweils separate Dichtungsträger 1 mit Dichtungssegmenten 3 auf. Der rechte Innenring 100 weist ein stromauf angeordnetes Ringsegment als Dichtungsträger 1 auf.

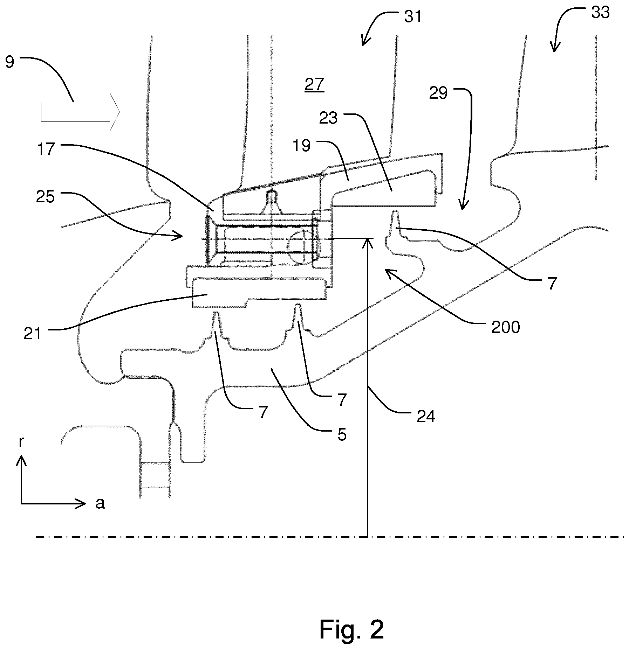

Der linke Innenring 100 weist ein breites (bezogen auf die Axialrichtung a) Dichtungssegment 3 auf. Auf dem Rotorarm 5 sind vier axial hintereinander angeordnete Dichtfins 7 dargestellt, die in das als Einlaufdichtung ausgeführte Dichtungssegment 3 eingreifen. Die hintereinander angeordneten Dichtfins 7 können als Labyrinthdichtung bezeichnet werden. Der separate Dichtungsträger 1 ist mittels einer Verschraubung mit dem Innenring 100 verbunden. Der separate Dichtungsträger 1 ist am Innenring 100 angeflanscht. Aufgrund der separaten Bauweise des Dichtungsträgers 1 weist die Anordnung ein höheres Gewicht und erhöhte Fertigungstoleranzen gegenüber dem erfindungsgemäßen Innenring 200 (s. Fig. 2) auf.

Der mittlere Innenring 100 ist ähnlich dem linken Innenring 100 aufgebaut, weist jedoch zwei voneinander getrennte Dichtungssegmente 3 auf. Die Dichtungssegmente 3 sind radial versetzt angeordnet. Insgesamt greifen drei Dichtfins 7 in das als Einlaufdichtung ausgeführte stromab angeordnete Dichtungssegment 3 ein.

Der rechte Innenring 100 weist ein entgegen der Axialrichtung a stromauf (entgegen der Hauptdurchströmungsrichtung 9) angeordnetes Ringsegment als Dichtungsträger 1 mit einem Dichtungssegment 3 auf. Aufgrund des Dichtungssegments 3, das mit dem am stromauf angeordneten Ringsegment verbunden ist, ergibt sich eine große, tiefe und offene Kavität 11 zwischen einem Leitgitter 13 und einer nachfolgenden Rotorstufe 15.

**Fig. 2** zeigt eine Schnittdarstellung eines erfindungsgemäßen axial geteilten Innenrings 200 mit einem ersten, stromauf angeordneten Ringsegment 17, einem zweiten, stromab angeordneten Ringsegment 19, sowie einem ersten, stromauf angeordneten Dichtungssegment 21 und einem zweiten, stromab angeordneten Dichtungssegment 23.

Die beiden Ringsegmente 17, 19 sind mittels einer Verschraubung 25 miteinander verbunden. Der erfindungsgemäße axial geteilte Innenring 200 ist stirnseitig an einer Leitschaufel 27 radial innen fixiert.

Die Dichtungssegmente 21, 23 sind als Einlaufdichtungen ausgeführt. In die Dichtungssegmente 21, 23 greifen Dichtfins 7 ein, die an einem Rotorarm 5 befestigt oder mit dem Rotorarm 5 integral verbunden sind. In das Dichtungssegment 21 greifen zwei Dichtfins 7 ein. Diese Anordnung kann als Labyrinthdichtung bezeichnet werden. In das Dichtungssegment 23 greift ein Dichtfin 7 ein. Sowohl das Dichtungssegment 23 als auch der stromab angeordnete Dichtfin 7 sind axial (stromab) und radial (nach radial außen) versetzt gegenüber dem Dichtungssegment 21 angeordnet. Das zweite Dichtungssegment 23 ist auf einem Radius angeordnet, der größer ist als der mittlere Radius 24 der radialen Erstreckung des ersten Ringsegments 17. Aufgrund dieser versetzten Anordnung ist die Kavität 29 (zwischen dem Leitgitter 31 und der nachfolgenden Rotorstufe 33) kleiner gegenüber einer Kavität 11 gemäß dem Stand der Technik (s. Fig. 1). Dadurch können die weiter oben diskutierten Vorteile erzielt werden.

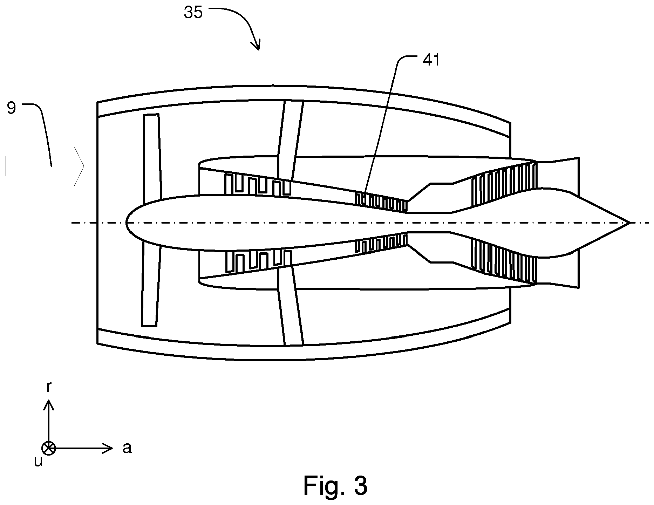

**Fig. 3** zeigt schematisch stark vereinfacht ein erfindungsgemäßes Flugtriebwerk 35 mit einem erfindungsgemäßen Leitschaufelkranz 37. Der erfindungsgemäßen Leitschaufelkranz 37 ist rein exemplarisch in einem Hochdruckverdichterabschnitt des Flugtriebwerks 35 angeordnet.

### Bezugszeichenliste

- 100: Innenring gemäß dem Stand der Technik
- 200: Innenring
- a: axial; Axialrichtung
- r: radial; Radialrichtung
- u: Umfangsrichtung
- 1: Dichtungsträger
- 3: Dichtungssegment
- 5: Rotorarm
- 7: Dichtfin
- 9: Hauptdurchströmungsrichtung
- 11: Kavität einer Anordnung gemäß dem Stand der Technik
- 13: Leitgitter
- 15: Rotorstufe
- 17: erstes Ringsegment
- 19: zweites Ringsegment
- 21: erstes, stromauf angeordnetes Dichtungssegment
- 23: zweites, stromab angeordnetes Dichtungssegment
- 24: mittlerer Radius der radialen Erstreckung des ersten Ringsegments
- 25: Verschraubung
- 27: Leitschaufel
- 29: Kavität einer Anordnung mit einem erfindungsgemäßen Innenring
- 31: Leitgitter einer Anordnung mit einem erfindungsgemäßen Innenring
- 33: Rotorstufe einer Anordnung mit einem erfindungsgemäßen Innenring
- 35: Flugtriebwerk
- 37: Leitschaufelkranz

## Patentansprüche

1. Axial geteilter Innenring (200) für eine Strömungsmaschine, wobei der Innenring (200) zum Verbinden mit Leitschaufeln (27) ausgestaltet ist, umfassend wenigstens ein erstes, stromauf angeordnetes Ringsegment (17) und ein zweites, stromab angeordnetes Ringsegment (19), wobei das zweite Ringsegment (19) ein erstes Dichtungssegment (21) aufweist, und wenigstens ein Abschnitt des zweiten Ringsegments (19) relativ zum ersten Ringsegment (17) radial innen angeordnet ist,
**dadurch gekennzeichnet, dass,**
sich Abschnitte des zweiten Ringsegments (19) und Abschnitte des ersten Dichtungssegments (21) stromauf über die axiale Breite des ersten Ringsegments (17) erstrecken.

2. Innenring (200) nach Anspruch 1, wobei das zweite Ringsegment (19) mit einem zweiten Dichtungssegment (23) verbunden ist oder ein zweites Dichtungssegment (23) aufweist, wobei das zweite Dichtungssegment (23) stromab von dem ersten Dichtungssegment (21) und/oder stromab von dem ersten Ringsegment (17) angeordnet ist.

3. Innenring (200) nach Anspruch 2, wobei das zweite Dichtungssegment (23) auf einem Radius angeordnet ist, der größer ist als der mittlere Radius (24) der radialen Erstreckung des ersten Ringsegments (17).

4. Innenring (200) nach einem der vorangegangenen Ansprüche, wobei der Innenring (200) mehr als zwei Dichtungssegmente aufweist.

5. Innenring (200) nach einem der vorangegangenen Ansprüche, wobei die Dichtungssegmente (21, 23) Einlaufdichtungen sind.

6. Innenring (200) nach einem der vorangegangenen Ansprüche, wobei wenigstens ein Dichtungssegment (21, 23) formschlüssig und/oder materialschlüssig mit dem Innenring (200) verbunden ist.

7. Leitschaufelkranz (37) einer Strömungsmaschine, die einen Innenring (100) nach einem der vorangegangenen Ansprüche aufweist.

8. Leitschaufelkranz (37) nach dem vorangegangenen Anspruch, wobei der Leitschaufelkranz (37) mit einem Gehäuse eines Verdichters, insbesondere eines axialen Hochdruckverdichters, verbunden ist.

9. Flugtriebwerk (35) mit wenigstens einem Leitschaufelkranz (37) nach einem der Ansprüche 7 oder 8.

## Claims

1. Axially split inner ring (200) for a turbomachine, the inner ring (200) being designed to be connected to guide vanes (27), comprising at least a first ring segment (17) arranged upstream and a second ring segment (19) arranged downstream, the second ring segment (19) having a first sealing segment (21), and at least one portion of the second ring segment (19) being arranged radially inwards relative to the first ring segment (17),
**characterized in that**
portions of the second ring segment (19) and portions of the first sealing segment (21) extend upstream over the axial width of the first ring segment (17).

2. Inner ring (200) according to claim 1, wherein the second ring segment (19) is connected to a second sealing segment (23) or has a second sealing segment (23), wherein the second sealing segment (23) is arranged downstream of the first sealing segment (21) and/or downstream of the first ring segment (17).

3. Inner ring according to claim 2, wherein the second sealing segment (23) is arranged on a radius that is larger than the average radius (24) of the radial extent of the first ring segment (17).

4. Inner ring (200) according to any of the preceding claims, wherein the inner ring (200) has more than two sealing segments.

5. Inner ring (200) according to any of the preceding claims, wherein the sealing segments (21, 23) are inlet seals.

6. Inner ring (200) according to any of the preceding claims, wherein at least one sealing segment (21, 23) is interlockingly connected and/or integrally bonded to the inner ring (200).

7. Guide vane ring (37) of a turbomachine that has an inner ring (100) according to any of the preceding claims.

8. Guide vane ring (37) according to the preceding claim, wherein the guide vane ring (37) is connected to a housing of a compressor, in particular of an axial high-pressure compressor.

9. Aircraft engine (35) comprising at least one guide vane ring (37) according to either claim 7 or claim 8.

## Revendications

1. Bague intérieure séparée axialement (200) pour une turbomachine, la bague intérieure (200) étant conçue pour être connectée à des aubes directrices (27), comprenant au moins un premier segment annulaire disposé en amont (17) et un second segment annulaire disposé en aval (19), le second segment annulaire (19) présentant un premier segment d'étanchéité (21), et au moins une section du second segment annulaire (19) étant disposée radialement à l'intérieur par rapport au premier segment annulaire (17),
**caractérisée en ce que**
des sections du second segment annulaire (19) et des sections du premier segment d'étanchéité (21) s'étendent en amont sur la largeur axiale du premier segment annulaire (17).

2. Bague intérieure (200) selon la revendication 1, le second segment annulaire (19) étant connecté à un second segment d'étanchéité (23) ou présentant un second segment d'étanchéité (23), le second segment d'étanchéité (23) étant disposé en aval du premier segment d'étanchéité (21) et/ou en aval du premier segment annulaire (17).

3. Bague intérieure (200) selon la revendication 2, le second segment d'étanchéité (23) étant disposé sur un rayon qui est plus grand que le rayon moyen (24) de l'extension radiale du premier segment annulaire (17).

4. Bague intérieure (200) selon une des revendications précédentes, la bague intérieure (200) présentant plus de deux segments d'étanchéité.

5. Bague intérieure (200) selon une des revendications précédentes, les segments d'étanchéité (21,23) étant des joints d'entrée.

6. Bague intérieure (200) selon une des revendications précédentes, au moins un segment d'étanchéité (21,23) étant connecté par correspondance géométrique et/ou par correspondance de matière à la bague intérieure (200).

7. Couronne d'aube directrice (37) d'une turbomachine, qui présente une bague intérieure (100) selon une des revendications précédentes.

8. Couronne d'aube directrice (37) selon la revendication précédente, la couronne d'aube directrice (37) étant connectée à un boîtier d'un compresseur, en particulier d'un compresseur axial à haute pression.

9. Réacteur d'avion (35) comportant au moins une couronne d'aube directrice (37) selon une des revendications 7 ou 8.
